# EUROPÄISCHE PATENTSCHRIFT

(11) **EP 1 517 815 B1**
(45) Veröffentlichungstag und Bekanntmachung des Hinweises auf die Patenterteilung: **14.02.2007**
(21) Anmeldenummer: 03714639.6
(22) Anmeldetag: 14.02.2003
(51) Int. Cl.: B60R 21/0132

(54) **VERFAHREN ZUR ANSTEUERUNG EINES RÜCKHALTESYSTEMS**
METHOD FOR DRIVING A RETAINING SYSTEM
PROCEDE DE DECLENCHEMENT DU FONCTIONNEMENT D' UN SYSTEME DE RETENUE

(30) Priorität: 18.06.2002 DE 10227003
(43) Veröffentlichungstag der Anmeldung: 30.03.2005
(73) Patentinhaber: ROBERT BOSCH GMBH, 70442 Stuttgart (DE)
(72) Erfinder: ROELLEKE, Michael, 71229 Leonberg-Hoefinden (DE); AUST, Sabine, 70192 Stuttgart (DE); CZAYKOWSKA, Anja, 70736 Fellbach (DE)
(86) Internationale Anmeldenummer: PCT/DE2003/000453
(87) Internationale Veröffentlichungsnummer: WO 2003/106226

(56) Entgegenhaltungen:
- WO-A-02/053419
- DE-A- 10 126 127
- US-B1- 6 196 578

## Beschreibung

### Stand der Technik

Die Erfindung geht aus von einem Verfahren zur Ansteuerung eines Rückhaltesystems nach der Gattung des unabhängigen Patentanspruchs.

Aus DE 101 26 127 A1, als nächstliegender Stand der Technik angesehen, ist eine Sicherheitsvorrichtung zum Freigeben und Sperren eines betätigbaren Insassenrückhaltesystems bekannt. Dabei wird bestimmt, ob ein Zusammenstoßgeschwindigkeitswert und ein Zusammenstoßersetzungswert innerhalb eines Schwellenwertimmunitätsbereichs sind, wobei der Zusammenstoß im Immunitätsbereich durch einem Zusammenstoßgeschwindigkeitsschwellenwert definiert wird, der eine versetzungsbasierte Funktion und einen Zusammenstoßversetzungsschwellenwert hat.

WO-A-02/053419, Stand der Technik gemäß Artikel 54(3)EPÜ, zeigt die Merkmale des Oberbegriffs des Anspruch 1.

### Vorteile der Erfindung

Das erfindungsgemäße Verfahren zur Ansteuerung eines Rückhaltesystems hat den Vorteil, dass der Schwellwert durch eine gebündelte Größe auf die aktuelle Situation, die sich durch Signalmerkmale manifestiert, angepasst wird. Diese Größe bestimmt sich aus einer Mehrzahl von Merkmalen des Beschleunigungssignals und/oder des Geschwindigkeitssignals und/oder eines weiteren Sensorsignals. Damit kann der Schwellwert auf individuelle Signaleigenschaften angepasst werden, wobei durch die Bündelung der verschiedenen Funktionen, die diese Signaleigenschaften untersuchen, nur eine einzige Größe verwendet wird, die zur Anpassung des Schwellwerts verwendet wird. Dies führt zu einem strukturierten Eingriff in das erfindungsgemäße Verfahren und damit den erfindungsgemäßen Auslösealgorithmus. Dies vereinfacht den Eingriff in den Algorithmus und verbessert die Übersicht. Die einzelnen Funktionen, die die Signaleigenschaften untersuchen, werden durch eine vorgegebene Logik zusammengefasst und greifen dann nur an einer Stelle in den Algorithmus ein.

Durch die Beeinflussung an einer Stelle kann auch die Anforderung an die Beeinflussung für jedes Signal zu jedem Zeitpunkt formuliert und damit systematischer ein Lösungsansatz und auch neue Funktionalitäten erarbeitet werden. Dies führt bei einer automatischen Parameteroptimierung zu einer Reduktion des Zeitaufwands.

Es ist vorteilhaft, dass die Merkmale in Abhängigkeit von verschiedenen Funktionen zur Misuse-Erkennung, Barrieren-Erkennung und Crashtyp-Erkennung bestimmt werden. Auch die zeitlichen Verhältnisse bezüglich des Crashfensters, also ab wann der Auslösealgorithmus zu rechnen beginnt, wird zur Merkmalsbildung verwendet. Weiterhin ist von Vorteil, dass all die Merkmale in einem Addierer zusammengefasst werden, an dessen Ausgang vorteilhafter Weise ein Verstärker zur Bewertung der Größe vorliegt. Dieser Verstärker kann in Abhängigkeit von bestimmten Signaleigenschaften eingestellt werden. Das Beschleunigungssignal, das zur Schwellwertberechnung verwendet wird, kann vorteilhafter Weise vorher mittels eines oder mehrerer Filter gefiltert werden, vorzugsweise mittels eines Tiefpassfilters.

Durch die in den abhängigen Ansprüchen aufgeführten Maßnahmen und Weiterbildungen sind vorteilhafte Verbesserungen des im unabhängigen Patentanspruch angegebenen Verfahrens zur Ansteuerung eines Rückhaltesystems möglich.

Ein weiterer vorteilhafter Aspekt der Erfindung ist, dass einige frei wählbare Merkmale, die sich aus den Beschleunigungssignalen ableiten, und gegebenenfalls auch weitere Sensorsignale wie von einer Insassensensorik und/oder einem Gurtschloss in einer Matrix miteinander logisch verknüpft werden, um anhand der Verknüpfung zu entscheiden, ob diese Signale für die Anpassung des Statusgrößen und dynamische Größen miteinander verknüpft werden. Folglich können damit dynamische Crashmerkmale unter Berücksichtigung der zu Crashbeginn eingetragenen Statusinformationen bewertet werden. Diese Bewertung kann abhängig vom betrachteten Sensorsignal, dem Fahrzeug oder dem jeweiligen Rückhaltemittel zwischen unwichtig und wichtig variieren. Wichtig oder unwichtig bedeutet dabei dann ein entsprechender Verstärkungsfaktor, je wichtiger das dynamische Crashmerkmal ist, desto höher ist der Verstärkungsfaktor und damit der Einfluss auf die Anpassung des Schwellwerts. Die einzelnen Verstärkungsfaktoren werden dann über die gesamte Matrix zu einem Gesamtverstärkungsfaktor für die Anpassung des Schwellwerts zusammengefasst. Das Matrixkonzept erlaubt eine einfache Hinzufügung oder Löschung von neuen Verknüpfungen. Die Übersichtlichkeit wird dadurch erheblich gesteigert.

Von besonderem Vorteil ist es, ein Steuergerät zur Durchführung des erfindungsgemäßen Verfahrens zur Ansteuerung eines Rückhaltesystems zu verwenden.

### Zeichnung

Ausführungsbeispiele der Erfindung sind in der Zeichnung dargestellt und werden in der nachfolgenden Beschreibung näher erläutert.

### Es zeigen

- Figur 1: ein Blockschaltbild des erfindungsgemäßen Verfahrens und
- Figur 2: einen beispielhaften Signalverlauf

### Beschreibung

Üblicherweise werden in Auslösealgorithmen das Beschleunigungs- und das integrierte Beschleunigungssignal unabhängig voneinander verarbeitet. Die Signalverläufe des Beschleunigungssignals und des Geschwindigkeitssignals weisen unter Umständen Merkmale auf, die zu einem Eingriff in den Auslösealgorithmus führen, um die Auswirkung dieser Merkmale zu berücksichtigen. Beispielsweise muss bei einem Hammerschlag, der ein Beschleunigungssignal von kurzer Dauer aber hoher Amplitude aufweist, der Schwellwert stark angehoben werden, um eine Auslösung durch einen solchen Hammerschlag zu vermeiden. Dafür ist dann ein Zuschlag im Auslösealgorithmus notwendig. Es sind mehrere solche Merkmale in den Signalen durch Signalanalyse erkennbar, die nun erfindungsgemäß in einem Addierer zu einer Größe addiert werden, die zusätzlich mit einem Verstärkungsfaktor bewertbar ist. Das erfindungsgemäße Verfahren ermöglicht eine solche Strukturänderung des Algorithmus, die eine erhebliche Vereinfachung des Eingriffs in den Algorithmus führt und insgesamt die Übersicht verbessert.

Durch die hohen Anforderungen bezüglich einer sehr frühen Signaltrennung durch den Algorithmus muss ein Basiskonzept, das die Verwendung des Beschleunigungssignals einmal zur Berechnung des Schwellwerts für das Geschwindigkeitssignal, das zum anderen aus dem Beschleunigungssignal durch Integration bestimmt wird, vorsieht, durch weitere Funktionen unterstützt werden. Insbesondere durch den verstärkten Einsatz von kundenspezifischen Funktionen werden üblicher Weise nur lokale Lösungen geschaffen. Erfindungsgemäß werden nun diese Lösungen systematisch und strukturiert zusammengefasst. Insbesondere wird dabei der Gesamteingriff skaliert. Es wird dadurch eine Vervielfachung des Basisalgorithmuskonzeptes vermieden, da nicht eine Mehrzahl von unabhängigen Auslöseschwellen notwendig ist.

Zusätzlich wird durch die beschriebene Verknüpfung von Statusgrößen wie Sitzposition des Fahrers, Gurtstatus der Insassen oder Eigengeschwindigkeit des Fahrzeugs zu Crashbeginn mit dynamischen Größen wie definierte Frequenzanteilen, der Auswertung des Beschleunigungssignals in Fahrzeugquerrichtung, der berechneten Crashschwere aus dem Beschleunigungssignal von ausgelagerten Sensoren oder fahrzeugspezifischen Funktionen zur Erkennung bestimmter Merkmale bei Crashes oder Misuse-Manövern eine bessere Bewertung der dynamischen Größen während des Crashverlaufs und damit ein besserer angepaßter Schutz für die Fahrzeuginsassen erreicht. Es kommt also zu einer Fusion von Sensorwerten in einer Matrix.

Nachfolgende Matrix zeigt ein erstes Beispiel:

| | M 1 | Gegurtet | Ungegurtet |
|---|---|---|---|
| Y- | 1 | Minimaler Effekt auf | Kein |
| Schwere | | Gurtstrafferschwelle | Effekt |
| | 2 | Maximaler Effekt auf | Kein |
| | | Gurtstrafferschwelle | Effekt |
| | 3 | Kein Effekt | Kein |
| | | | Effekt |

Die Matrix beschreibt, dass im Crashverlauf erhöhte Beschleunigungswerte in Fahrzeugquerrichtung (Y-Richtung) erkannt werden, die auf einen winkligen oder Offset-Crash schlie0en lassen. Diese Y-Schwere, in den Klassen 1-3 (Spalte M1), wird in dem Moment der Erkennung mit der Information des Gurtstatus, gegurtet oder ungegurtet, kombiniert. Im ungegurteten Fall wäre die Y-Schwere für die Berechnung der Gurtstrafferschwelle irrelevant, im gegurteten Fall würde sie eine Seitwärtsbewegung des Insassen vorhersagen, die beispielsweise ein zweistufiges Gurtstraffersystem beeinflussen könnte. Demnach wird in diesem Fall die kombinierte Information als wichtig bewertet, d.h. maximaler Effekt. Irrelevant bedeutet kein Effekt. Ein gewisser effekt wird mit minimal angegeben. Dies wird dann in eine entsprechende Anpassung des Schwellwerts für den Gurtstraffer umgerechnet.

Nachfolgende Matrix zeigt ein zweites Beispiel:

| M2 | M 3 | Fahrer | | Beifahrer | |
|---|---|---|---|---|---|
| | | Sitz | Sitz | Sitz | Sitz |
| | | Nah | Weit | Nah | Weit |
| Low | 1 | Max. | Kein | Max. | kein |
| | 2 | Min. | Kein | Kein | Kein |
| Hoch | 1 | Max. | Max. | Max. | Max. |
| | 2 | Max. | Kein | Kein | Kein |

In der ersten Spalte M1 werden hohe und niedrige Geschwindigkeit in der zweiten und vierten Zeile eingetragen. In der zweiten Spalte M3 sind dann jeweils zwei Frequenzklassen diesen beiden Geschwindigkeitsstufen zugeordnet. Diese erste Frequenzklasse bedeutet jeweils eine weiche Barriere und die zweite Frequenzklasse eine harte Barriere. In der dritten Spalte wird die Wirkung angegeben, die bei einer nahen Sitzposition des Fahrers für die jeweilige Frequenzklasse auftritt. In der vierten Spalte wird angegeben, welche Wirkung eine weite Sitzposition des Fahrers hat. In der fünften und sechsten Spalte wird dies für den Beifahrer wiederholt.

Im Crashverlauf werden bestimmte Frequenzanteile im Beschleunigungssignal erkannt, die auf eine weiche Barriere schließen lassen. Es erfolgt dafür eine Klassifizierung der Frequenzanteile in 1 und 2. Die Frequenzklasse wird im Moment der Erkennung der Frequenzanteile mit den Informationen Sitzposition (vorne/hinten) und Eigengeschwindigkeit zu Crashbeginn kombiniert. Da für Fahrer und Beifahrer im Auslösealgorithmus getrennte Auslöseschwellen berechnet werden, kann je nach berechneter Frequenzklasse des Crashes unterschiedlicher Einfluß auf die Auslösung für einen sehr weit vorne sitzenden Fahrer und einen sehr weit hinten sitzenden Beifahrer genommen werden, wobei die Kombination mit dem vorne sitzenden Insassen als sehr wichtig und mit dem hinten sitzenden Insassen als weniger wichtig bewertet werden könnte.

Wird nun eine vergleichsweise geringe Geschwindigkeit in Kombination mit einem sehr weit vorne sitzenden Fahrer verzeichnet, so könnte wegen zu hohem Verletzungsrisiko die zweistufige Front-Airbag-Auslösung desensiblisiert werden, während bei einer hohen Geschwindigkeit die Frontauslösung für einen vorne sitzenden Insassen vor der für einen hinten sitzenden Insassen erfolgen muß.

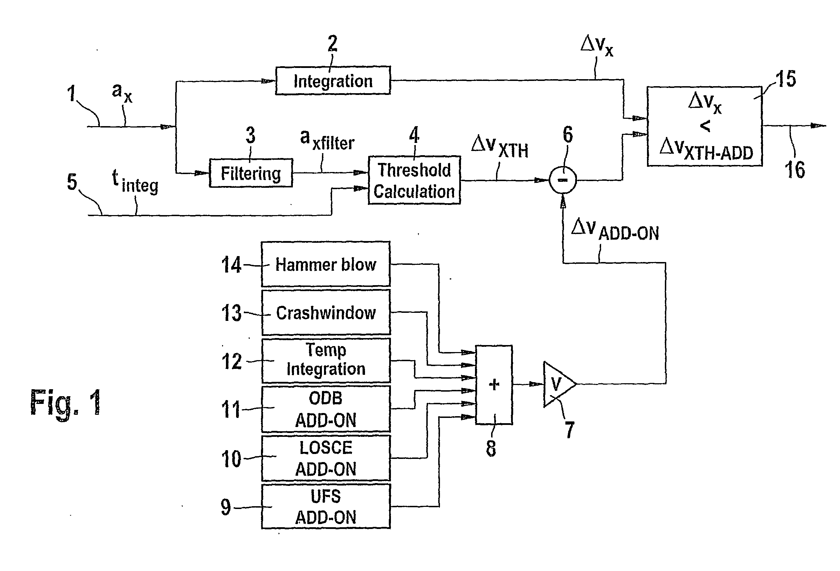

Figur 1 zeigt in einem Blockdiagramm das erfindungsgemäße Verfahren zur Ansteuerung eines Rückhaltesystems. Beim Punkt 1 des Blockdiagramms wird ein Beschleunigungssignal aₓ eingespeist. Dieses Beschleunigungssignal wird hier durch einen Beschleunigungssensor oder eine Kombination von Beschleunigungssensoren, die winklig zueinander angeordnet sind, im Steuergerät erzeugt. Es ist alternativ oder zusätzlich möglich, dass das Beschleunigungssignal durch einen ausgelagerten Sensor, einen sogenannten Satellitensensor, erzeugt wird. Solch ein Satellitensensor kann in der Seite und/oder an der Fahrzeugfront angeordnet sein.

Als Sensoren werden üblicher Weise Beschleunigungssensoren verwendet, die auf mikromechanischer bzw. piezoelektrischer Basis arbeiten. Es sind jedoch auch mechanische Sensoren möglich, oder andere Sensoren, die geeignet sind, die Beschleunigung aufzunehmen. Das Beschleunigungssignal wird dann in zwei unabhängigen Pfaden einmal durch eine Integration 2 zur Berechnung einer Geschwindigkeit Δvₓ und zum anderen zur Berechnung eines Schwellwertes 4 verwendet.

Vor der Berechnung des Schwellwerts 4 wird eine Filterung 3 des Beschleunigungssignals aₓ vorgenommen. Als Filter wird üblicher Weise ein Tiefpassfilter verwendet. Damit liegt dann das Signal a_{xFilter} vor, das in die Berechnung des Beschleunigungssignals eingeht. Als weiterer Eingabeparameter in die Berechnung des Schwellwerts 4 wird eine Integrationszeit 5 verwendet.

Der so bestimmte Schwellwert Δv_{XTH} wird durch einen Subtrahierer 6 mit dem Korrekturwert Δv_{ADD-ON} angepasst. Der Korrekturwert Δv_{ADD-ON} wurde durch einen Verstärker 7 erzeugt. Der Verstärker 7 hat ein Signal von einem Addierer 8 verstärkt. Er hat also eine Gewichtung vorgenommen.

An den Eingängen des Addierers 8 ist eine Vielzahl von Merkmalen bzw. Funktionen 9-14 angeschlossen. Dazu zählen das Signal von einem Upfrontsensor 9, ein Zuschlag für eine deformierbare Barriere 11, eine Berücksichtigung des Integrationsfensters 13 während des Aufpralls und eine weitere Berücksichtigung des Hammerschlags 14. All diese Signalmerkmale, die sich von dem Beschleunigungssignal aₓ bzw. dem Integrationssignal Δvₓ ableiten, werden durch diese Funktionen auf ihre Bedeutung im Hinblick auf eine Schwellwertbeeinflussung untersucht. Es ist möglich, dass die einzelnen Funktionen durch eigene Verstärkungsfaktoren gewichtet werden, wobei die Gewichtung signalabhängig vorgenommen werden kann.

Der angepasste Schwellwert nach dem Subtrahierer 6 führt dann in einem Vergleicher 15 zu einem Vergleich des Schwellwerts Δv_{XTH-ADD} mit dem integrierten Beschleunigungssignal Δvₓ. In Abhängigkeit von diesem Vergleich wird dann über einen Ausgang 16 das Rückhaltemittel angesteuert. D.h., ist das Signal Δvₓ über dem Schwellwert, dann ist ein Auslösefall erkannt und in Abhängigkeit gegebenenfalls von einer Plausibilität ist das Rückhaltemittel, ein Gurtstraffer bzw. ein Airbag, anzusteuern.

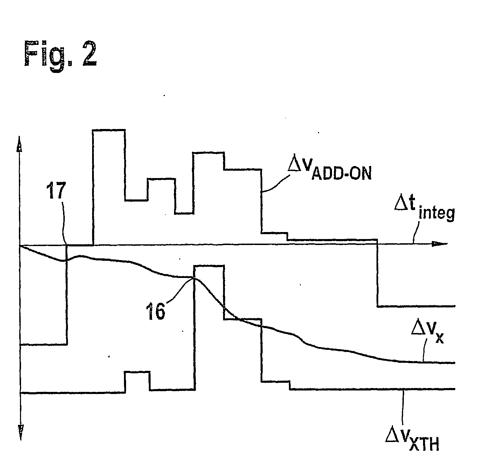

Figur 2 zeigt in einem Zeit-Geschwindigkeits-Diagramm den Verlauf der Schwellwerte mit und ohne Korrektur sowie des integrierten Beschleunigungssignals. Es ist erkennbar, dass der integrierte Beschleunigungswert Δvₓ bis zum Zeitpunkt 17 sowohl über den angepassten Schwellwert Δv_{XADD-ON} und dem durch die Schwellwertberechnung 4 ausgegebenen Schwellwert Δv_{XTH} liegt. Ab diesem Zeitpunkt 17 jedoch liegt das integrierte Beschleunigungssignal unterhalb des korrigierten Schwellwerts, so dass der Vergleicher 15 kein Ansteuerungssignal für das Rückhaltesystem ausgibt. Ohne die Korrektur durch den Subtrahierer 6 würde bis zum Zeitpunkt 16 das integrierte Beschleunigungssignal Δvₓ über dem Schwellwert Δv_{XTH} liegen. Damit wurde dargestellt, dass durch die Signalanalyse eine Auslösung vermieden werden konnte.

Alternativ ist es möglich, dass ein System mit einem Kriterium eingesetzt wird, das mit einer festen Schwelle verglichen wird. Diese Schwelle kann dann durch Zusatzkriterien verändert werden. Damit kann eine Kombination von einzelnen Kriterien ersetzt werden.

## Patentansprüche

1. Verfahren zur Ansteuerung eines Rückhaltesystems, wobei ein Beschleunigungssignal, das charakteristisch für einen Aufprall ist, erzeugt wird, wobei das Beschleunigungssignal zum einen zu einem Geschwindigkeitssignal integriert wird und zum anderen zur Bestimmung eines Schwellwerts für das Geschwindigkeitssignal verwendet wird, wobei der Schwellwert durch eine Größe (ΔV_{ADD-ON}) angepasst wird, die sich aus einer Mehrzahl von Merkmalen des Beschleunigungssignals und/oder des Geschwindigkeitssignals und/oder eines wenigstens einen weiteren Sensorsignals bestimmt, wobei das Rückhaltesystem in Abhängigkeit von einem Vergleich des Geschwindigkeitssignals (Δvₓ) mit dem angepassten Schwellwert (Δv_{XTH-ADD}) angesteuert wird. **dadurch gekennzeichnet, dass** die Mehrzahl der Merkmale in Abhängigkeit von einem Hammerschlag und/oder einem Integrationsfenster und/oder einem Signal von einem Upfrontsensor und/oder in Abhängigkeit von einer Signalbeeinflussung durch eine deformierbare Barriere und/oder durch eine Mustererkennung bestimmt werden.

2. Verfahren nach Anspruch 1, **dadurch gekennzeichnet, dass** die Mehrzahl der Merkmale durch einen Addierer (8) zusammengefasst werden.

3. Verfahren nach einem der Ansprüche 1 oder 2, **dadurch gekennzeichnet, dass** wenigstens ein Verstärker (7) zur Bewertung der Größe verwendet wird.

4. Verfahren nach Anspruch 3, **dadurch gekennzeichnet, dass** der Verstärker (7) adaptiv eingestellt wird.

5. Verfahren nach einem der vorherigen Ansprüche, **dadurch gekennzeichnet, dass** ein Filter (3) zur Filterung des Beschleunigungssignals vor der Schwellwertberechnung (4) eingesetzt wird.

6. Verfahren nach einem der vorhergehenden Ansprüche, **dadurch gekennzeichnet, dass** zumindest ein Teil der Merkmale und/oder das zumindest eine Sensorsignal logisch miteinander verknüpft werden, um die Größe (Δv_{ADD-ON}) zu bestimmen.

7. Verfahren nach Anspruch 6, **dadurch gekennzeichnet, dass** die Verknüpfung mittels einer Matrix durchgeführt wird.

8. Verfahren nach Anspruch 7, **dadurch gekennzeichnet, dass** dynamische mit statischen Merkmalen in der Matrix verknüpft werden.

9. Verwendung eines Steuergeräts in einem Verfahren nach einem der Ansprüche 1 bis 8.

## Claims

1. Method for actuating a restraint system, an acceleration signal which is characteristic of an impact being generated, the acceleration signal being, on the one hand, integrated to form a speed signal and, on the other hand, being used to determine a threshold value for the speed signal, the threshold value being adapted by means of a variable (Δv_{ADD-ON}) which is determined for a multiplicity of features of the acceleration signal and/or of the speed signal and/or of at least one further sensor signal, the restraint system being actuated as a function of a comparison of the speed signal (Δvₓ) with the adapted threshold value (Δv_{XTH-ADD}), **characterized in that** the multiplicity of features are determined as a function of a hammer blow and/or an integration window and/or a signal by an upfront sensor and/or as a function of the influencing of a signal by a deformable barrier and/or by a pattern detection means.

2. Method according to Claim 1, **characterized in that** the multiplicity of features are combined by means of an adder (8).

3. Method according to one of Claims 1 or 2, **characterized in that** at least one amplifier (7) is used to evaluate the variable.

4. Method according to Claim 3, **characterized in that** the amplifier (7) is set adaptively.

5. Method according to one of the preceding claims, **characterized in that** a filter (3) is used to filter the acceleration signal before the threshold value calculation (4).

6. Method according to one of the preceding claims, **characterized in that** at least some of the features and/or the at least one sensor signal are logically combined with one another in order to determine the variable (Δv_{ADD-ON}).

7. Method according to Claim 6, **characterized in that** the logic combination is carried out by means of a matrix.

8. Method according to Claim 7, **characterized in that** dynamic features are logically combined with static features in the matrix.

9. Use of a control unit in a method according to one of Claims 1 to 8.

## Revendications

1. Procédé de commande d'un système de retenue, selon lequel on génère un signal d'accélération caractéristique pour une collision, le signal d'accélération est d'une part intégré dans un signal de vitesse et d'autre part utilisé pour déterminer une valeur de seuil pour le signal de vitesse, la valeur de seuil est adaptée par une grandeur (Δv_{VADD-ON}) qui est déterminée à partir d'une pluralité de caractéristiques du signal d'accélération et/ou du signal de vitesse et/ou d'au moins un autre signal de capteur, et on commande le système de retenue en fonction d'une comparaison du signal de vitesse (Δvₓ) avec la valeur de seuil adaptée (ΔV_{XTH-ADD}),
**caractérisé en ce que**
la pluralité de caractéristiques est déterminée en fonction d'un coup de marteau et/ou d'une fenêtre d'intégration et/ou d'un signal d'un capteur frontal et/ou en fonction d'une influence de signal par une barrière déformable et/ ou par une identification modèle.

2. Procédé selon la revendication 1,
**caractérisé en ce que**
la pluralité de caractéristiques est totalisée par un additionneur (8).

3. Procédé selon l'une quelconque des revendications 1 ou 2,
**caractérisé en ce qu'**
on utilise au moins un amplificateur (7) pour évaluer la grandeur.

4. Procédé selon la revendication 3,
**caractérisé en ce que**
l'amplificateur (7) est réglé de façon adaptative.

5. Procédé selon l'une quelconque des revendications précédentes,
**caractérisé en ce qu'**
un filtre (3) est utilisé pour le filtrage du signal d'accélération avant le calcul de la valeur de seuil (4).

6. Procédé selon l'une quelconque des revendications précédentes,
**caractérisé en ce qu'**
au moins une partie des caractéristiques et/ ou l'au moins un signal de capteur sont combinés logiquement les uns avec les autres pour déterminer la grandeur (Δv_{ADD-ON}).

7. Procédé selon la revendication 6,
**caractérisé en ce que**
la combinaison est réalisée à l'aide d'une matrice.

8. Procédé selon la revendication 7,
**caractérisé en ce que**
dans la matrice on combine des caractéristiques dynamiques avec des caractéristiques statiques.

9. Utilisation d'un appareil de commande dans un procédé selon l'une quelconque des revendications 1 à 8.
